# EUROPEAN PATENT APPLICATION

(11) **EP 1 347 003 A1**
(43) Date of publication of application: **24.09.2003**
(21) Application number: 02006071.1
(22) Date of filing: 18.03.2002
(51) Int. Cl.: C08G 18/10, C08G 18/76, C08G 18/79, C08G 18/81, C09D 175/16

(54) **Radiation curable resin composition**

(71) Applicant: HUNTSMAN INTERNATIONAL LLC, Salt Lake City, Utah 84108 (US)
(72) Inventor: Gurke, Thorsten, 3090 Ovrijse (BE); Vermaelen, Gunther, 3300 Vissenaken (BE)
(74) Representative: Swinnen, Anne-Marie

(57) **Abstract**

A urethane acrylate obtainable by reacting a) one or more polyisocyanates containing at least two isocyanate groups, b) one or more hydroxyalkyl (meth)acrylates, and c) one or more isocyanate-reactive compounds wherein diphenylmethane diisocyanate is used as the polyisocyanate a).

## Description

This invention relates to radiation curable resin compositions, in particular to urethane acrylates.

In radiation curing, binders are used which polymerize or cure rapidly under the effect of UV light or electrons. A customary radiation-curing coating material consists in principle of a reactive resin, one or more monomers, and, if desired, fillers, flatting agents and/or pigments, plus one or more additives if necessary. With the UV technology, polymerization is usually initiated using photoinitiators or photosensitizers.

The selection of binder depends on a number of factors: in particular on the substrate, on the required film properties, for example, hardness, scratch resistance, flexibility, and adhesion, and on the method of application.

Examples of resins, as unsaturated compounds containing reactive groups, are polyesters, urethanes, polyacrylates, epoxy resins, oligoether acrylates and unsaturated polyester/styrene binders.

Urethane acrylates are used especially for the over-coating of PVC and cork flooring, owing to their high abrasion resistance and flexibility. Further examples of applications are wood coatings, overprint varnishes, printing inks, and leather coatings. Additionally, urethane acrylates are used in coating systems for flexible plastic substrates. In the electrical industry, urethane acrylates are used in screen printing inks and solder resists for printed circuit boards.

There are a number of representatives of the urethane acrylate compounds, which may be prepared from a large number of starting materials. Acrylated urethanes are formed in principle by reacting an isocyanate group with a hydroxyl-containing acrylate or methacrylate monomer. The simplest urethane acrylates are obtained by reacting a diisocyanate with a hydroxyl-containing monomer. If further hydroxyl-containing compounds are used, such as polyols, polyesters or polyethers having more than one hydroxyl group, for example, chain extension takes place. Commercially available diisocyanates, which may be acrylated, include tolylene diisocyanate (TDI), hexamethylene diisocyanate (HMDI), isophorone diisocyanate (IPDI), and tetramethylxylene diisocyanate (TMXDI). Also available are oligomers of some of these products, for example, of HMDI. The acrylic monomers with hydroxyl functionality that are employed in practice are, in particular, hydroxyethyl acrylate (HEA) and hydroxypropyl acrylate (HPA).

The urethane acrylates of the prior art based on TDI or aliphatic diisocyanates are liquid at room temperature and hence not suitable for powder spray applications.

Coating with powder is a rational approach to surface coating in industrial areas. Solid, powdered products are applied to substrates and cured by baking. In the baking process, the powder melts and coheres to form a smooth, pore-free coating. Further curing takes place by radiation, which transforms the powder resin into a hard, durable coating.
Powder coatings are manually or automatically sprayed via an electrostatic powder sprayer (EPS). The powder overspray is recovered and recycled.
The baking of the coatings is accomplished at temperatures of 150 to 200°C (within 10 to 35 min). Coating thickness of 40 to 150 µm can be achieved in one pass.
Due to the lack of solvents and the practically 100 % use of the materials, relatively thick coatings are attainable with one pass.

It is an object of the present invention to provide for the preparation of solid urethane acrylates and their use as binders for radiation curable coatings.
Solid systems can be applied via powder spray thereby avoiding solvent and water emissions, which take place during the application of liquid coating systems. Further the baking of radiation curable systems applied via powder spray can take place at temperatures of about 100°C.

It has surprisingly now been found that by using diphenylmethane diisocyanate and derivatives thereof, urethane acrylates are obtained which are solid at room temperature.

The present invention involves urethane acrylates obtainable by reacting a) one or more polyisocyanates containing at least two isocyanate groups, b) one or more hydroxyalkyl acrylates or hydroxyalkyl methacrylates, and c) one or more isocyanate-reactive compounds, characterised in that diphenylmethane diisocyanate (MDI) is used as the polyisocyanate a).

The resulting urethane acrylates are solid at room temperature with a moderate melting point and are useful in radiation curable powder coatings, especially for the coating of heat sensitive substrates. Furthermore their unsaturated equivalent weight is lower than the prior art resins; therefore the crosslink density is higher, resulting in more resistant coatings.

(Meth)acrylic, as used herein, is understood to represent separately and collectively acrylic, methacrylic and mixtures thereof. Similarly, (meth)acrylate, as used herein, is understood to represent separately and collectively acrylate, methacrylate and mixtures thereof.

The reaction process includes (i) reacting the isocyanate-reactive compound, the polyisocyanate and the hydroxyalkyl (meth)acrylates altogether, (ii) reacting the isocyanate-reactive compound and the polyisocyanate, and reacting the resulting product with the hydroxyalkyl (meth)acrylate; (iii) reacting the polyisocyanate and the hydroxyalkyl (meth)acrylate, and reacting the resulting product with the isocyanate-reactive compound.
The most preferred embodiment is process (ii) above: initially a prepolymer based on MDI and a polyfunctional isocyanate-reactive compound is made with an isocyanate content of between 5 and 25 wt%; the residual isocyanate groups are then reacted with hydroxy(meth)acrylate.

The diphenylmethane diisocyanate (MDI) used in the present invention can be in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, or any of their derivatives having a urethane, isocyanurate, allophonate, biuret, uretonimine, uretdione and/or iminooxadiazinedione groups and mixtures of the same.
A preferred MDI is 4,4'-MDI or liquid pure MDI variants with 2,4'-MDI contents of less than 55 wt%. Other preferred MDI's are uretonimine-modified MDI's.
These MDI compounds may be used either individually or in combinations of two or more.

Together with MDI other polyisocyanates can be used as well. Examples of such suitable further polyisocyanates are tolylene diisocyanate (TDI), hexamethylene diisocyanate (HMDI), isophorone diisocyanate (IPDI), butylene diisocyanate, trimethylhexamethylene diisocyanate, di(isocyanatocyclohexyl)methane, isocyanatomethyl-1,8-octane diisocyanate and tetramethylxylene diisocyanate (TMXDI). However according to the present invention MDI constitutes at least 50 % by weight of total polyisocyanate.

The polyisocyanate compound is typically utilised in an amount ranging from 10 to 90, preferably from 20 to 85 % by weight of the essential ingredients utilised to prepare the urethane acrylate.

The hydroxy-functional acrylates, which may be used in this invention, are compounds having the formula 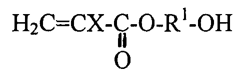 wherein X is hydrogen, alkyl or aryl or other substituent groups such as Cl, Br, CN which will not deteriously affect the curing of the finished prepolymer, R¹ is an aliphatic or aromatic nucleus. Suitable acrylic monomers with hydroxyl functionality are, in particular, hydroxyalkyl acrylates such as 2-hydroxyethyl acrylate (HEA) and 2- or 3-hydroxypropyl acrylate (HPA) or 2-, 3- or 4-hydroxybutyl acrylate, for example. It is likewise possible to use the corresponding, less toxic hydroxyalkyl methacrylates.
These hydroxy-functional acrylates can be used either individually or in combinations of two or more.

Instead of or together with the hydroxy-functional acrylates other hydroxylated ethylenic compounds can be used such as hydroxylated vinyl ethers

The hydroxyalkyl (meth)acrylate is typically utilised in an amount ranging from 10 to 90, preferably from 15 to 85 % by weight of the essential ingredients utilised to prepare the urethane acrylate.

The isocyanate-reactive compound to be used in the preparation of the urethane acrylates of the present invention is preferably a compound containing at least two isocyanate-reactive groups, preferably hydroxyl groups.
Examples of suitable isocyanate-reactive compounds include polyether polyols, polyester polyols, polycarbonate polyols, polycaprolactone polyols, and other polyols. These polyols may be used either individually or in combinations of two or more.

Given as examples of the polyether polyols are polyethylene glycol, polypropylene glycol, polypropylene glycol-ethylene glycol copolymer, polytetramethylene glycol, polyhexamethylene glycol, polyheptamethylene glycol, polydecamethylene glycol, and polyether polyols obtained by ring-opening copolymerisation of alkylene oxides, such as ethylene oxide and/or propylene oxide, with isocyanate-reactive initiators of functionality 2 to 8.

Polyester diols obtained by reacting a polyhydric alcohol and a polybasic acid are given as examples of the polyester polyols. As examples of the polyhydric alcohol, ethylene glycol, polyethylene glycol, tetramethylene glycol, polytetramethylene glycol, 1,6-hexanediol, 3-methyl-1,5-pentanediol, 1,9-nonanediol, 2-methyl-1,8-octanediol, and the like can be given. As examples of the polybasic acid, phthalic acid, dimer acid, isophthalic acid, terephthalic acid, maleic acid, fumaric acid, adipic acid, sebacic acid, and the like can be given.

As examples of the polycarbonate polyols, polycarbonate of polytetrahydrofuran, poly(hexanediol carbonate), poly(nonanediol carbonate), poly(3-methyl-1,5-pentamethylene carbonate), and the like can be given.

Polycaprolactone diols obtained by reacting ε-caprolactone and a diol compound are given as examples of the polycaprolactone polyols having a melting point of 0°C or higher. Here, given as examples of the diol compound are ethylene glycol, polyethylene glycol, polypropylene glycol, tetramethylene glycol, polytetramethylene glycol, 1,2-polybutylene glycol, 1,6-hexanediol, neopentyl glycol, 1,4-cyclohexanedimethanol, 1,4-butanediol, and the like.

As examples of other polyols, ethylene glycol, propanediols, 1,4-butanediol, 1,5-pentanediol, 1,6-hexanediol, cyclohexanedimethanol, polyoxyethylene bisphenol A ether, polyoxypropylene bisphenol A ether, polyoxyethylene bisphenol F ether, polyoxypropylene bisphenol F ether, and the like can be given.

The isocyanate-reactive compound is typically utilised in an amount ranging from 10 to 90, preferably from 20 to 85 % by weight of the essential ingredients utilised to prepare the urethane acrylate.

The molar ratio of diisocyanate to hydroxyalkyl acrylate may be varied within wide ranges. Urethane acrylates, which are particularly suitable for use, are obtained, however, using an approximately stoichiometric ratio of the components to one another. For the purposes of the present invention, accordingly, it is particularly preferred to set the ratio of isocyanate-reactive compound, polyisocyanate and hydroxyl group-containing (meth)acrylate so that 1.1 to 3 equivalents of an isocyanate group included in the polyisocyanate and 0.1 to 1.5 equivalents of a hydroxyl group included in the hydroxyl group-containing (meth)acrylate are used for one equivalent of the hydroxyl group included in the polyol.

Optionally an amount of monofunctional alcohol (e.g. methanol) can be incorporated to increase the unsaturated equivalent weight and/or to ensure that no residual monomeric isocyanate or acrylate is present.
Furthermore the crosslink density can be adjusted via introduction of non-reactive monols until the resulting film gets tacky and is therefore usable as a pressure sensitive adhesive or until destruction of the crystalline structure. Such non-reactive monols are added in amounts varying between 0 and 50, preferably between 2 and 25 % by weight of the essential ingredients utilised to prepare the urethane acrylate.

In preparing the diisocyanate-polyol isocyanate-terminated intermediate conventional processing techniques can be used. The reaction can be catalysed using catalysts such as cobalt naphthenate, triethylamine, N,N-dimethyl cyclohexylamine, N-methyl morpholine, N,N-dimethyl monoethanol amine. Reaction conditions are selected such that one of the isocyanate groups of the diisocyanate reacts preferentially with each hydroxyl group of the polyol, leaving the other isocyanate group free for further reaction with the acrylic substituent of the adduct. Preferably temperatures of less than 40°C are employed in this stage of the reaction. The isocyanate-terminated adduct thus prepared is further reacted with a hydroxy-substituted acrylate to prepare the finished prepolymer. Stoichiometric amounts of the acrylate are used to react with the isocyanate-terminated adduct. The reaction is carried out in conventional apparatus at temperatures of 60 to 120°C. Although the reaction proceeds without being catalysed, catalysts such as cobalt naphthenate, dibutyl tin acetate and other siccative type metal salts can be used. In order to avoid premature polymerisation of the acrylate reactants, 50 to 2000 ppm of reaction mixture of conventional polymerisation inhibitor such as hydroquinone, methyl ether of hydroquinone or steric hindered phenols, is incorporated in the reaction mixture.

The number average molecular weight of the urethane acrylate of the present invention is preferably in the range from 450 to 5000, and more preferably from 550 to 3000.

The urethane acrylates of this invention may be employed in photopolymerisable compositions, i.e. compositions that are capable of polymerising or curing upon exposure to actinic radiation, e.g. ultraviolet radiation or electron beam. Generally they may be blended in any convenient manner with the other ingredients commonly employed in such photopolymerisable compositions. Thus, for example, the photopolymerisable composition may contain the urethane acrylate of this invention, a photoinitiator, a photosensitizer, a polymerisation inhibitor and other additives as may be desirable. Examples of such additives include monomers selected from monofunctional or polyfunctional acrylates, antioxidants, fillers, thickeners, coating surface improvers, light stabilisers, flow additives, adhesion promotors, flatting agents, pigments and optical brighteners.

Given as examples of the photopolymerization initiator are 1-hydroxycyclohexylphenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide, bis-(2,6-dimethoxybenzoyl)-2,4,4-trimethylpentylphosphine oxide, bis-(2,4,6-trimethylbenzoyl)-phenylphosphine oxide and the like.
Given as examples of the photosensitizer are triethylamine, diethylamine, N-methyldiethanolamine, ethanolamine, 4-dimethylaminobenzoic acid, methyl-4-dimethylaminobenzoate, ethyl 4-dimethylaminobenzoate, isoamyl 4-dimethylaminobenzoate, and the like.
The photoinitiator or combination of photoinitiators is typically utilised in an amount ranging from 0.5 to 15, and preferably from 0.5 to 5 wt% of the total amount of the components for the radiation curable resin composition.

The urethane acrylate is used in an amount from 10 to 100 wt%, and preferably from 40 to 99 wt% of the total amount of the radiation curable composition.

The radiation curable composition according to the invention can be applied with all the standard application methods, such as spraying, casting or roller application, preferably by means of powder spray application.

Radiation curable compositions can be applied to a surface to be coated or bonded by various techniques well known in the art. After application of the coating to a surface, polymerisation of the coating is initiated. The polymerisation may be initiated by any method or means known in the art for initiating radiation-curable materials. At the present time, it is preferred to initiate polymerisation of the coating by exposing the coating to any source of actinic radiation at a wavelength within the ultraviolet or visible spectral regions. Suitable sources of radiation include mercury, xenon, carbon arc and tungsten filament lamps, sunlight, etc. Exposures may be from less than about 1 second to 10 minutes or more depending upon the amounts of particular polymerizable materials and photoinitiators being utilised and depending upon the radiation source and distance from the source. The compositions may also be polymerised by exposure to electron beam irradiation in a dosage typically ranging from less than about 1 megarad to 100 megarad or more. Generally speaking, the rate of polymerisation increases with increasing amounts of photoinitiator at a given light exposure and also increases with increasing light intensity at a given level of photoinitiator. The use of thermal energy during or after exposure to a radiation source will also generally accelerate the curing reaction, and even a moderate increase in temperature may greatly accelerate cure rate.

A radiation curable composition based on the urethane acrylates of the present invention can be used in essentially any type of radiation curable coating or adhesive application known in the art. For example, the radiation curable composition can be utilised as coatings for resilient flooring such as vinyl sheet goods or tile, and for other applications such as coatings for plastic, thread, paper, wood or metal.
By reducing the crosslink density these coatings have a pressure sensitive character and can therefore be used as pressure sensitive adhesives.

The various aspects of this invention are illustrated, but not limited by the following examples.

In these examples the following ingredients were used:
SUPRASEC 1306: 4,4'-MDI, commercially available from Huntsman Polyurethanes
SUPRASEC 2020: uretonimine-modified 4,4'-MDI, commercially available from Huntsman Polyurethanes
DALTOCEL F456: a polyether polyol of functionality 2 and OH value 56 mg KOH/g, commercially available from Huntsman Polyurethanes
HEA: hydroxyethylacrylate
EHOL: 2-ethyl-1-hexanol
IRGACURE 1700: a photoinitiator commercially available from Ciba Geigy
DAROCURE 1173: a photoinitiator commercially available from Ciba Geigy
IPDI: isophorone diisocyanate
SUPRASEC and DALTOCEL are trademarks of Huntsman International LLC.

### EXAMPLE 1

A series of prepolymers with different NCO content were produced based on SUPRASEC 1306 and DALTOCEL F456. The radiation curable resin was then obtained by simultaneously reacting SUPRASEC MPR, DALTOCEL F456 and HEA. In this series of experiments the amount of HEA is sufficient to react all the remaining isocyanate groups (= 100%).
The composition of the radiation curable resins is given in Table 1 below.

**Table 1**

| | NCO (%) | SUPRASEC 1306 (pbw) | DALTOCEL F456 (pbw) | HEA (pbw) |
|---|---|---|---|---|
| S1 | 5 | 24.35 | 75.65 | 13.55 |
| S2 | 10 | 37.59 | 62.41 | 27.09 |
| S3 | 15 | 50.84 | 49.16 | 40.64 |
| S4 | 20 | 64.08 | 35.92 | 54.19 |
| S5 | 25 | 77.33 | 22.67 | 67.74 |

### EXAMPLE 2

In a second series of radiation curable systems one started from a prepolymer of NCO 15 % based on SUPRASEC 1306 and DALTOCEL F456 and varied the amount of HEA: 100 %, 75 %, 50 % and 25 %. The remaining free NCO-groups were reacted with the corresponding amounts of 2-ethyl-1-hexanol.
The composition of the radiation curable resins is given in Table 2 below.

**Table 2**

| | HEA (%) | EHOL (%) | HEA (pbw) | EHOL (pbw) |
|---|---|---|---|---|
| S3 | 100 | 0 | 40.64 | 0 |
| S6 | 75 | 25 | 31.10 | 11.62 |
| S7 | 50 | 50 | 20.74 | 23.26 |
| S8 | 25 | 75 | 10.37 | 34.88 |

### EXAMPLE 3

The viscosity at 80°C was measured for all the radiation curable systems prepared in Examples 1 and 2. Also the melting point of the resins was determined via DSC (for S1 via Koffler bench).
System S9 is based on SUPRASEC 2020 reacted with 100 % HEA.
The results are given in Table 3 below.

**Table 3**

| | Viscosity (mPa.s) | % HEA | pbw HEA | Melting point (°C) |
|---|---|---|---|---|
| S1 | 1730 | 100 | 13.55 | 45 |
| S2 | 2080 | 100 | 27.09 | 53 |
| S3 | 2530 | 100 | 40.64 | 61 |
| S4 | 1840 | 100 | 54.19 | 75 |
| S5 | 1100 | 100 | 67.74 | 81 |
| S6 | 1700 | 75 | 30.97 | 48 |
| S7 | 790 | 50 | 21.92 | - |
| S8 | 665 | 25 | 11.28 | - |
| S9 | 860 | 100 | 81.56 | 125 |

### EXAMPLE 4: Radiation curing tests

Some of the radiation curable systems of examples 1 and 2 were tested under a mercury lamp. These systems were all exposed for 10 seconds to this lamp, whereby the energy transfer was 0.8 W/cm².
The tested systems were:
- A: 20 g S4 + 0.4 g IRGACURE 1700
- B: 20 g S4 + 0.4 g DAROCUR 1173
- C: 20 g IPDI + 0.4 g DAROCUR 1173 (*)
- D: 20 g S1 + 0.4 g DAROCUR 1173
- E: 20 g S1 + 0.4 g IRGACURE 1700
- F: 20 g S9 + 0.4 g DAROCUR 1173
- G: 20 g S9 + 0.4 g IRGACURE 1700

The comparative example C (*) is a liquid system. The liquidity of this system makes it impossible to use this material in powder coating applications and therefore it was poured onto the substrate.
The other samples were powdered and transferred onto a tin surface, molten and exposed to UV light.

The Shore A hardness, the Koffler bench melting point and the solubility in acetone was measured. Results are presented in Table 4. Fully crosslinked coatings were obtained.

**Table 4**

| System No. | Shore A hardness | Melting point (°C) | Solubility acetone |
|---|---|---|---|
| A | 90 | > 150 | None |
| B | 90 | > 150 | None |
| C | 95 | > 150 | None |
| D | 80 | > 150 | None |
| E | 85 | > 150 | None |
| F | 100 | > 150 | None |
| G | 95 | > 150 | None |

## Claims

1. A urethane acrylate obtainable by reacting a) one or more polyisocyanates containing at least two isocyanate groups, b) one or more hydroxy-functional (meth)acrylates, and c) one or more isocyanate-reactive compounds, **characterised in that** diphenylmethane diisocyanate (MDI) is used as the polyisocyanate a).

2. The urethane acrylate of claim 1 wherein the diphenylmethane diisocyanate is 4,4'-MDI or an MDI variant with 2,4'-MDI contents of less than 55 wt% or a uretonimine-modified MDI.

3. The urethane acrylate of claim 1 or 2 wherein the hydroxy-functional (meth)acrylate is hydroxyalkyl (meth)acrylate.

4. The urethane acrylate of claim 1, 2 or 3 wherein the isocyanate-reactive compound is a polyether polyol.

5. A process for preparing a urethane acrylate, which comprises reacting a) one or more polyisocyanates containing at least two isocyanate groups, b) one or more hydroxy-functional (meth)acrylates, and c) one or more isocyanate-reactive compounds, **characterised in that** diphenylmethane diisocyanate is used as polyisocyanate a).

6. The process of claim 5 wherein the polyisocyanate and the isocyanate-reactive compound are first reacted and the resulting product is then reacted with the hydroxy-functional (meth)acrylate.

7. A radiation curable composition which comprises a urethane acrylate as defined in any one of claims 1 to 4 and, optionally, an additive.

8. The composition of claim 7 wherein the additive is a photoinitiator.

9. An article which is coated with a composition as defined in claim 7 or 8.

10. A process for coating an article comprising the steps of applying a radiation curable composition as defined in claim 7 or 8 by powder spray and exposing the coating to ultraviolet radiation or electron beam irradiation.
